# EUROPÄISCHE PATENTANMELDUNG

(11) **EP 1 294 119 A1**
(43) Veröffentlichungstag der Anmeldung: **19.03.2003**
(21) Anmeldenummer: 02015141.1
(22) Anmeldetag: 06.07.2002
(51) Int. Cl.: H04L 1/00, G05B 19/414

(54) **Schnittstelle zum seriellen Übertragen von digitalen Daten**

(30) Priorität: 02.08.2001 DE 10137835
(71) Anmelder: HORST SIEDLE GmbH & Co. KG., 78120 Furtwangen (DE)
(72) Erfinder: Ehling, Ernst, 73765 Neuhausen (DE)
(74) Vertreter: Dreiss, Fuhlendorf, Steimle & Becker

(57) **Zusammenfassung**

Es wird ein Verfahren zum seriellen Übertragen von digitalen Daten von einem Sender an einen Empfänger beschrieben. Bei dem Verfahren wird mindestens ein Datenwort (14, 15) übertragen, das eine Mehrzahl Bits aufweist. Weiterhin wird ein zugehöriges Fehlerbit (12) übertragen, das angibt, ob die Erzeugung des Datenworts (14, 15) fehlerfrei war. Es werden ebenfalls mehrere zugehörige Prüfbits (16) übertragen, aus denen ableitbar ist, ob die Übertragung des Datenworts (14, 15) und des Fehlerbits (12) fehlerfrei war.

## Beschreibung

### Stand der Technik

Die Erfindung betrifft ein Verfahren und eine Schnittstelle zum seriellen Übertragen von digitalen Daten von einem Sender an einen Empfänger.

Beispielsweise bei einer Werkzeugmaschine ist es erforderlich, die von einem Messsystem erfassten digitalen Messwerte der Position des zu bearbeitenden Werkstücks an ein Rechengerät zu übertragen. Hierzu können bekannte serielle Übertragungseinrichtungen und -verfahren eingesetzt werden, die eine ausreichend hohe Übertragungsgeschwindigkeit ermöglichen. Derartige serielle Übertragungen enthalten jedoch keinerlei Hinweise, ob die bei dem Empfänger angekommenen Daten fehlerfrei sind. Dies kann zur Folge haben, dass das Rechengerät fehlerhaft übertragene Messwerte als korrekt verarbeitet.

### Aufgabe und Vorteile der Erfindung

Aufgabe der Erfindung ist es, ein Verfahren und eine Schnittstelle zum seriellen Übertragen von digitalen Daten von einem Sender an einen Empfänger zu schaffen, mit denen der Empfänger prüfen kann, ob die erhaltenen Daten fehlerfrei sind.

Diese Aufgabe wird erfindungsgemäß durch ein Verfahren zum seriellen Übertragen von digitalen Daten von einem Sender an einen Empfänger gelöst, bei dem mindestens ein Datenwort übertragen wird, das eine Mehrzahl Bits aufweist, bei dem ein zugehöriges Fehlerbit übertragen wird, das angibt, ob die Erzeugung des Datenworts fehlerfrei war, und bei dem mehrere zugehörige Prüfbits übertragen werden, aus denen ableitbar ist, ob die Übertragung des Datenworts und des Fehlerbits fehlerfrei war.

Die Aufgabe wird erfindungsgemäß auch durch eine entsprechende Schnittstelle zum seriellen Übertragen von digitalen Daten von einem Sender an einen Empfänger gelöst.

Durch die Übertragung des Fehlerbits kann der Empfänger erkennen, ob bei der Erzeugung des zugehörigen Datenworts ein Fehler aufgetreten ist. Erkennt beispielsweise das Messsystem einer Werkzeugmaschine, dass die Erfassung der Position des zu bearbeitenden Werkstücks aus irgendwelchen Gründen fehlerhaft war, so kann sie dies durch eine Aktivierung des Fehlerbits dem Rechengerät mitteilen. Das Rechengerät erkennt dann an dem aktiven Fehlerbit, dass das zugehörige Datenwort fehlerhaft ist und deshalb nicht weiterverarbeitet werden darf.

Durch die Übertragung der Prüfbits kann der Empfänger erkennen, ob die Übertragung des zugehörigen Datenworts fehlerfrei war. Zu diesem Zweck werden die Prüfbits von dem Sender gemäß einem sogenannten "cyclic redundancy check (CRC)" in Abhängigkeit von den zu übertragenden Daten ermittelt. Im Empfänger wird das CRC-Verfahren auf die gesamten empfangenen Daten einschließlich der Prüfbits angewendet. Ist das Ergebnis ungleich Null, so kann der Empfänger auf einen Übertragungsfehler schließen und die Verarbeitung der empfangenen Daten unterbinden.

Insgesamt wird durch die Erfindung somit erreicht, dass einerseits eine hohe Übertragungsgeschwindigkeit durch die Verwendung einer seriellen Schnittstelle möglich ist. Andererseits wird durch das übertragene Fehlerbit und die übertragenen Prüfbits der Vorteil erreicht, dass der Empfänger überprüfen kann, ob die bei dem Empfänger angekommenen Daten fehlerfrei sind. Eine Verarbeitung fehlerhafter Daten wird somit sicher vermieden.

Dabei ermöglicht die Erfindung nicht nur die empfängerseitige Überprüfung, ob die Übertragung der Daten als solche fehlerfrei war, sondern vorteilhafterweise auch die Überprüfung, ob die Erzeugung der zu übertragenden Daten fehlerhaft war. Auf diese Weise wird eine äußerst hohe Sicherheit im Hinblick auf die fehlerfreie Weiterverarbeitung der empfangenen Daten erreicht.

Bei einer vorteilhaften Weiterbildung der Erfindung werden die Prüfbits nach dem Datenwort und nach dem Fehlerbit übertragen. Dies bringt den Vorteil mit sich, dass die Prüfbits die richtige Position für die bei dem CRC-Verfahren durchgeführte Division aufweisen. Der Empfänger kann damit die gesamten empfangenen Daten einschließlich der Prüfbits sofort dem CRC-Verfahren unterziehen.

Bei einer weiteren vorteilhaften Weiterbildung der Erfindung wird das Fehlerbit vor dem Datenwort und vor den Prüfbits übertragen. Daraus resultiert der Vorteil, dass der Empfänger bei einem aktiven Fehlerbit das nachfolgende zugehörige Datenwort und die nachfolgenden zugehörigen Prüfbits gar nicht mehr einlesen oder verarbeiten muss.

Vorteilhafterweise wird ein zugehöriges Funktionsbit zuerst übertragen. Dies ermöglicht es dem Empfänger, den Beginn der zusammengehörigen Daten, also des Datenworts, des zugehörigen Fehlerbits und der zugehörigen Prüfbits in einfacher Weise zu erkennen.

Besonders zweckmäßig ist es, die Erfindung zur Übertragung von Messwerten eines vorzugsweise magnetostriktiven Messsystems an ein Rechengerät zu verwenden. In diesem Fall stellen die Datenwörter vorzugsweise Messwerte dar, die von dem Messsystem erfasst worden sind. Das Rechengerät ist dann vorzugsweise dazu vorgesehen, die erhaltenen Messwerte beispielsweise im Rahmen einer Steuerung und/oder Regelung einer Werkzeugmaschine zu verarbeiten.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

Ausführungsbeispiele der Erfindung
- Figur 1: zeigt eine schematische Darstellung eines Ausführungsbeispiels einer erfindungsgemäßen Schnittstelle zur Übertragung eines Datenblocks, und
- Figur 2: zeigt eine schematische Darstellung der Übertragung mehrerer Datenblöcke über die Schnittstelle der Figur 1.

Beispielsweise bei einer Werkzeugmaschine ist es erforderlich, die Position bzw. die Bewegung eines zu bearbeitenden Werkstücks möglichst genau zu erfassen. Dies kann beispielsweise mit einem magnetostriktiven Messsystem zur Längenmessung erreicht werden, wie dies unter anderem in der US 5,923,164 beschrieben ist. Die von dem Messsystem erfassten Messwerte werden dabei als digitale Daten zur Verfügung gestellt.

Für die Steuerung der Werkzeugmaschine ist überlicherweise ein Rechengerät vorgesehen, das in Abhängigkeit von den erfassten Messwerten beispielsweise Stellmotoren ansteuert, mit denen ein Werkzeugtisch verfahrbar ist, auf dem sich das zu bearbeitende Werkstück befindet.

Für diese Steuerung ist es erforderlich, dass die von dem Messsystem erfassten Messwerte an das Rechengerät übertragen werden. Hierzu wird üblicherweise eine Schnittstelle definiert, die die Art und Weise festlegt, wie die Messwerte von dem Messsystem an das Rechengerät übertragen werden. Insbesondere definiert die Schnittstelle die hardware- und softwaremäßigen Merkmale der Schnittstelle.

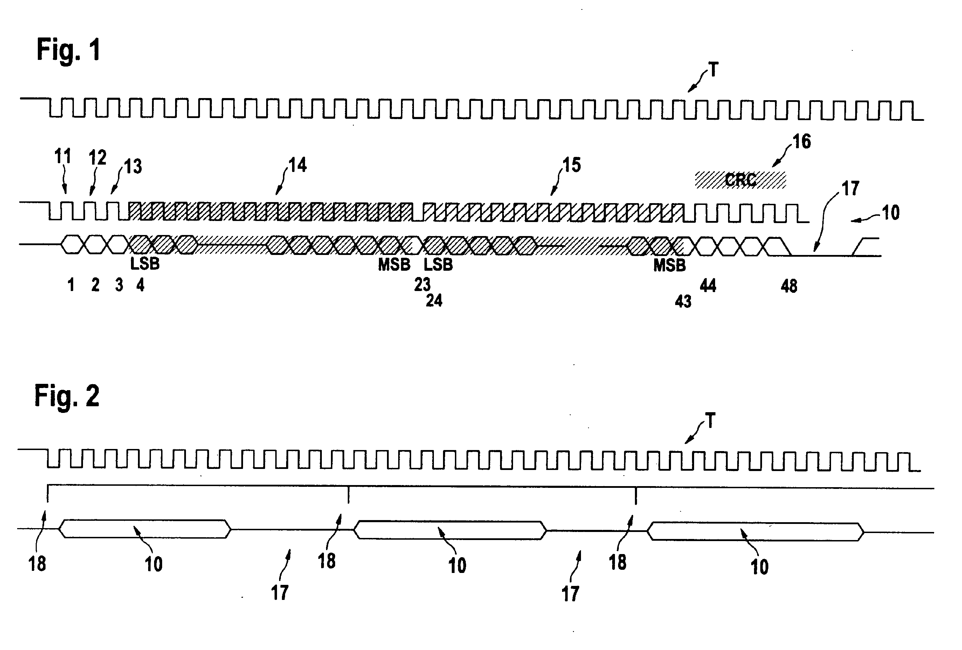

Anhand der Figuren 1 und 2 wird nachfolgend eine derartige Schnittstelle zur Übertragung von Messwerten erläutert. Bei den Messwerten kann es sich dabei um Weglängen oder auch um Zeitdauern handeln, wobei die Zeitdauern wiederum zu Weglängen korrespondieren können.

Da die Schnittstelle nicht nur zur Übertragung von Messwerten verwendet werden kann, ist nachfolgend immer von Datenwörtern die Rede. Da, wie erläutert wurde, die Messwerte als digitale Daten vorliegen, handelt es sich bei den Datenwörtern um digitale Daten.

Beispielhaft wird davon ausgegangen, dass ein einzelnes Datenwort eine Bitlänge von 20 Bit hat. Damit ist es beispielsweise bei einem magnetostriktiven Messsystem zur Längenmessung möglich, eine Messlänge von 5 Metern mit einer Auflösung von 5 Mikrometern zu erfassen.

Weiterhin wird beispielhaft davon ausgegangen, dass die Übertragung von Datenwörtern mit einer Frequenz von 16 Kilohertz erfolgen soll, dass also alle 62,5 Mikrosekunden neue Daten übertragen werden soll.

Bei der Schnittstelle zur Übertragung der Datenwörter handelt es sich um eine serielle und unidirektionale Schnittstelle. Dies bedeutet, dass die Datenwörter nur seriell von einem Sender, z.B. dem Messsystem, an einen Empfänger, z.B. an das Rechengerät, übertragen werden können. Weiterhin handelt es sich bei der Schnittstelle um eine synchrone Schnittstelle. Dies bedeutet, dass die Bits der zu übertragenden Datenwörter synchron mit einem Takt übertragen werden, und zwar derart, daß mit jeder positiven Flanke des Takts genau ein Bit übertragen wird.

Vorzugsweise handelt es sich hardwaremäßig um eine sogenannte RS422-Schnittstelle, die auch als sogenanntes "serielles synchrones Interface (SSI)" bezeichnet wird. Es wird beispielhaft davon ausgegangen, dass die Schnittstelle mit einem Takt von 1 Megahertz betrieben wird.

Insbesondere die softwaremäßige Definition der Schnittstelle ist nachfolgend anhand der Figur 1 beschrieben. Dabei ist in der Figur 1 der vorgenannte Takt schematisch dargestellt und mit der Abkürzung T versehen.

Es ist ein Datenblock vorgesehen, der insgesamt 48 Bits aufweist. Dieser Datenblock ist in der Figur 1 mit dem Bezugszeichen 10 gekennzeichnet.

Der Datenblock 10 setzt sich aus drei Systembits, einem ersten Datenwort, einem zweiten Datenwort und fünf sogenannten Prüfbits zusammen. Die in dem Datenblock 10 enthaltenen Systembits, Datenwörter und Prüfbits gehören zusammen und bilden insoweit eine Einheit von gemeinsam zu übertragenden Daten.

Die drei Systembits belegen die ersten drei Bits, also die Bits 1, 2 und 3 des Datenblocks.

Das erste Bit, das in der Figur 1 mit dem Bezugszeichen 11 gekennzeichnet ist, stellt ein sogenanntes Funktionsbit dar. Sofern dieses Funktionsbit 11 aktiv, also z.B. "1" ist, wird hierdurch angezeigt, dass ein Datenblock 10 vorhanden ist.

Das zweite Bit, das in der Figur 1 mit dem Bezugszeichen 12 gekennzeichnet ist, stellt ein Fehlerbit dar. Sofern dieses Fehlerbit 12 aktiv, also z.B. "1" ist, wird hierdurch angezeigt, dass die Erzeugung eines der in dem zugehörigen Datenblock enthaltenen Datenwörter fehlerhaft war.

Im Zusammenhang z.B. mit einem magnetostriktiven Messsystem ist es üblicherweise vorgesehen, dass das Messsystem eine Eigendiagnose oder dergleichen durchführt. Das Messsystem ist also in der Lage, einen Fehler bei der Erfassung der Messwerte zu erkennen. Wird ein derartiger Fehler von dem Messsystem im Hinblick auf einen bestimmten Messwert festgestellt, so kann das Messsystem das vorgenannte Fehlerbit 12 setzen. Damit wird dem empfangenden Rechengerät angezeigt, dass die Erfassung des in dem übertragenen Datenblock enthaltenen Messwerts fehlerhaft war. Das Rechengerät kann daraufhin diesen Messwert gesondert weiterverarbeiten.

Es wird darauf hingewiesen, dass sich das Fehlerbit 12 nicht auf die Übertragung von Daten von dem Sender zu dem Empfänger bezieht, sondern nur auf die Erzeugung der Daten in dem Sender.

Das dritte Bit, das in der Figur 1 mit dem Bezugszeichen 13 gekennzeichnet ist, kann frei verwendet werden und wird deshalb als freies Bit bezeichnet. Bei einem Messsystem kann dieses freie Bit 13 beispielhaft zur Unterscheidung von Messwerten und sonstigen, allgemeinen Daten verwendet werden. Ebenfalls kann das freie Bit 13 zur Unterscheidung von verschiedenen Versionen oder Konfigurationen des Senders, also z.B. des Messsystems verwendet werden.

Das erste Datenwort, das in der Figur 1 mit dem Bezugszeichen 14 gekennzeichnet ist, belegt die Bits 4 bis 23 des Datenblocks 10. Das zweite Datenwort, das in der Figur 1 mit dem Bezugszeichen 15 gekennzeichnet ist, belegt die Bits 24 bis 43 des Datenblocks 10. Wie bereits erwähnt wurde, kann es sich bei diesen Datenwörtern 14, 15 um Messwerte eines magnetostriktiven Messsystems handeln. Weiterhin kann es sich bei den Datenwörtern 14, 15 um aus derartigen Messwerten abgeleitete Werte handeln, beispielsweise um Positionswerte oder dergleichen. Ebenfalls kann es sich um auf sonstige Art und Weise berechnete Werte handeln, beispielsweise um Geschwindigkeitswerte oder dergleichen. Die vorgenannten Möglichkeiten können dabei paarweise oder auch gemischt in einem einzelnen Datenblock 10 vorhanden sein. Wie ebenfalls bereits erwähnt wurde, kann es sich bei den Datenwörtern 14, 15 auch um sonstige, allgemeine Daten handeln.

Die fünf Prüfbits, die in der Figur 1 mit dem Bezugszeichen 16 gekennzeichnet sind, belegen die Bits 44 bis 48 des Datenblocks 10. Diese Prüfbits 16 resultieren aus einem sogenannten "cyclic redundancy check (CRC)". Die Prüfbits 16 können deshalb auch als sogenannte CRC-Bits bezeichnet werden.

Bei dem "cyclic redundancy check (CRC)" handelt es sich um ein Verfahren, bei dem von dem Sender, also z.B. von dem magnetostriktiven Messsystem, die Bits 1 bis 43 durch ein vorgegebenes, sogenanntes Generatorpolynom dividiert werden, um dann den entstehenden Rest der Division als die vorgenannten fünf Prüfbits 16 an den Empfänger zu übertragen. In dem Empfänger, also z.B. in dem Rechengerät, wird dieselbe Division durch das Generatorpolynom mit allen empfangenen Bits 1 bis 48, alsoeinschließlich der fünf Prüfbits durchgeführt. Aufgrund der Einbeziehung der fünf Prüfbits 16 in die Division muß sich bei einer korrekter Übertragung der Wert Null ohne Rest ergeben. Ist dies der Fall, so bedeutet dies damit, dass die Übertragung des Datenblocks 10 fehlerfrei war. Ergibt sich ein anderer Wert, so bedeutet dies, dass bei der Übertragung des Datenblocks 10 ein Fehler aufgetreten ist.

Mit den fünf Prüfbits 16 ist es damit möglich zu prüfen, ob die Übertragung des Datenblocks 10 und damit der Datenwörter 14, 15 fehlerfrei war. Diese Überprüfung unterscheidet sich damit von dem Fehlerbit 12 dadurch, dass sie nur die Übertragung der Datenwörter 14, 15 als solche betrifft. Es wird darauf hingewiesen, dass die Prüfbits 16 nichts mit der Frage zu tun haben, ob die Erzeugung der Datenwörter 14, 15 fehlerfrei war.

Bei dem angenommenen Takt von 1 Megahertz dauert die Übertragung der 48 Bits des Datenblocks 10 insgesamt 48 Mikrosekunden. Alle 62,5 Mikrosekunden wird ein neues Datenwort von dem Sender, also z.B. von dem magnetostriktiven Messsystem zur Verfügung gestellt. Es verbleibt damit eine Zeitdauer von 14,5 Mikrosekunden, in der keine Übertragung von Daten stattfindet. Davon werden bei einem magnetostriktiven Messsystem 10 Mikrosekunden als systembedingte Totzeit verwendet.

Die systembedingte Totzeit, die in der Figur 1 mit dem Bezugszeichen 17 gekennzeichnet ist, kann bei dem magnetostriktiven Messsystem dazu genutzt werden, den oder die nächsten Messwerte in entsprechende Schieberegister parallel zu laden, um sie dann im Rahmen der nächsten Übertragung von Messwerten seriell auszulesen und an das Rechengerät zu übertragen.

In der Figur 2 sind drei Datenblöcke 10 dargestellt, wie sie anhand der Figur 1 vorstehend erläutert worden sind. Zwischen den jeweiligen Datenblöcken 10 ist die vorgenannte Totzeit 17 vorhanden.

Es wird darauf hingewiesen, dass der Takt T, wie er in der Figur 2 dargestellt ist, nicht maßstabsgerecht ist, sondern nur symbolisch angedeutet sein soll.

Bei einer ersten Alternative, die in der Figur 2 dargestellt ist, ist ein kontinuierlicher Takt T vorgesehen. Dieser Takt T wird von dem Empfänger, also z.B. von dem Rechengerät, an den Sender, also z.B. das magnetostriktive Messsystem übertragen.

Wie bereits erläutert wurde, werden alle 62,5 Mikrosekunden neue Datenwörter 14, 15 z.B. von dem magnetostriktiven Messsystem zur Verfügung gestellt. Der Zeitpunkt, wann diese neuen Datenwörter 14, 15 zur Übertragung bereit stehen, ist in der Figur 2 mit der Bezugsziffer 18 gekennzeichnet. Nach jedem dieser Zeitpunkte 18 wird von dem Sender, also z.B. dem Messsystem, jeweils das neu zur Verfügung stehende Datenwort 14, 15 im Rahmen eines neuen Datenblocks 10 mit dem Takt T zusammen an den Empfänger, also z.B. an das Rechengerät übertragen.

Bei der beschriebenen Alternative stellt der Empfänger, also z.B. das Rechengerät, nur den kontinuierlichen Takt T zur Verfügung. Die Auslösung der Übertragung eines Datenblocks 10 wird allein von dem Sender, also z.B. von dem Messsystem, ausgeführt, und zwar immer dann, wenn ein neues Datenwort 14, 15 von dem Messsystem erzeugt und zur Übertragung bereit gestellt worden ist.

Bei einer zweiten Alternative, die nicht dargestellt ist, ist kein kontinuierlicher Takt vorgesehen, sondern der Takt ist nur während der Übertragung der 48 Bits des Datenblocks 10 vorhanden. Der Takt T wird also als sogenannter "Burst" erzeugt. Die einem Datenblock 10 nachfolgende Totzeit 17 wird von dem Sender, also z.B. dem magnetostriktiven Messsystem dadurch erzwungen, daß das Übertragungssignal beispielsweise auf "0" gesetzt wird. Von dem Empfänger, also z.B. von dem Rechengerät, wird überwacht, wann das zu Übertragungssignal nicht mehr auf "0" ist, und wann damit die Totzeit beendet ist. Dann wird von dem Rechengerät ein neuer sogenannter "Burst" des Taktes T erzeugt und an den Sender, also z.B. an das magnetostriktive Messsystem übermittelt. Dies löst in dem Messsystem die Übertragung des nächsten Datenblocks 10 aus.

Eine weitere Möglichkeit der beschriebenen Schnittstelle besteht darin, dass keine Messwerte, sondern ganz allgemeine Daten übertragen werden. So ist es im Zusammenhang mit einem magnetostriktiven Messsystem beispielsweise möglich, die vorhandene Messlänge des Messsystems und/oder das Fertigungsdatum und/oder die Seriennummer des Messsystems als Datenwörter 14, 15 zu übertragen.

Derartige allgemeine Daten können dabei z.B. mit Hilfe des freien Bits 13 von den an sich zu übertragenden Daten, also beispielsweise von den Messwerten unterschieden werden. Der Empfänger, also z.B. das Rechengerät kann dann anhand des freien Bits 13 entscheiden, ob es sich um allgemeine Daten oder z.B. um Messwerte handelt. Alternativ ist es möglich, die allgemeinen Daten ganz am Anfang einer Übertragung vorzusehen, also unmittelbar nach dem Einschalten der für die Übertragung erforderlichen Geräte. In beiden Fällen können die allgemeinen Daten dabei in vorbestimmter Weise mehrfach wiederholt werden, um eine sichere Übertragung zu gewährleisten.

## Patentansprüche

1. Verfahren zum seriellen Übertragen von digitalen Daten von einem Sender an einen Empfänger, bei dem mindestens ein Datenwort (14, 15) übertragen wird, das eine Mehrzahl Bits aufweist, bei dem ein zugehöriges Fehlerbit (12) übertragen wird, das angibt, ob die Erzeugung des Datenworts (14, 15) fehlerfrei war, und bei dem mehrere zugehörige Prüfbits (16) übertragen werden, aus denen ableitbar ist, ob die Übertragung des Datenworts (14, 15) und des Fehlerbits (12) fehlerfrei war.

2. Verfahren nach Anspruch 1, bei dem die Prüfbits (16) nach dem Datenwort (14, 15) und nach dem Fehlerbit (12) übertragen werden.

3. Verfahren nach einem der Ansprüche 1 oder 2, bei dem das Fehlerbit (12) vor dem Datenwort (14, 15) und vor den Prüfbits (16) übertragen wird.

4. Verfahren nach einem der Ansprüche 1 bis 3, bei dem zwei Datenwörter (14, 15) zusammen mit dem Fehlerbit (12) und den Prüfbits (16) übertragen werden.

5. Verfahren nach einem der Ansprüche 1 bis 4, bei dem ein zugehöriges Funktionsbit (11) zuerst übertragen wird.

6. Verfahren nach einem der Ansprüche 1 bis 5, bei dem die Prüfbits (16) in Abhängigkeit von den davor zu übertragenden Daten gebildet werden.

7. Verfahren nach einem der Ansprüche 1 bis 6, bei dem das bzw. die Datenwörter (14, 15), das Fehlerbit (12), die Prüfbits (16) und gegebenenfalls das Funktionsbit (11) zusammen einen Datenblock (10) bilden, und bei dem mehrere Datenblöcke (10) aufeinanderfolgend übertragen werden.

8. Verfahren nach Anspruch 7, bei dem zwischen der Übertragung zweier aufeinanderfolgender Datenblöcke (10) eine Totzeit (17) belassen wird.

9. Verfahren nach einem der Ansprüche 7 oder 8, bei dem die Übertragung eines Datenblocks (10) nach einem Zeitpunkt (18) ausgelöst wird, in dem ein neues Datenwort (14, 15) zur Übertragung bereit gestellt wird.

10. Verfahren nach einem der vorstehenden Ansprüche, **gekennzeichnet durch** seine Anwendung zur Übertragung von Messwerten eines vorzugsweise magnetostriktiven Messsystems an ein Rechengerät.

11. Schnittstelle zwischen einem Sender und einem Empfänger, über die digitale Daten seriell übertragbar sind, bei der mindestens ein Datenwort (14, 15), ein Fehlerbit (12) und mehrere Prüfbits (16) zusammengehörend zur Übertragung vorgesehen sind, wobei das Datenwort (14, 15) eine Mehrzahl Bits aufweist, wobei das Fehlerbit (12) angibt, ob die Erzeugung des Datenworts (14, 15) fehlerfrei war, und wobei aus den Prüfbits (16) ableitbar ist, ob die Übertragung des Datenworts (14, 15) und des Fehlerbits (12) fehlerfrei war.

12. Schnittstelle nach Anspruch 11, bei der zuerst das Fehlerbit (123), dann das mindestens eine Datenwort (14, 15) und dann die Prüfbits (16) zur Übertragung vorgesehen sind.

13. Schnittstelle nach einem der Ansprüche 11 oder 12, bei der zwei Datenwörter (14, 15) zur Übertragung vorgesehen sind.

14. Schnittstelle nach einem der Ansprüche 11 bis 13, bei der zuerst ein Funktionsbit zur Übertragung vorgesehen ist.

15. Schnittstelle nach einem der Ansprüche 11 bis 14, bei der das bzw. die Datenwörter (14, 15), das Fehlerbit (12), die Prüfbits (16) und gegebenenfalls das Funktionsbit (11) zusammen einen Datenblock (10) bilden, und bei der mehrere Datenblöcke (10) aufeinanderfolgend zur Übertragung vorgesehen sind.

16. Schnittstelle nach einem der Ansprüche 11 bis 15, bei der der Sender ein vorzugsweise magnetostriktives Messsystem und der Empfänger ein Rechengerät ist.

17. Schnittstelle nach einem der Ansprüche 11 bis 16, bei der ein Takt (T) für die Übertragung der Daten von etwa 20 Kilohertz bis etwa 2 Megahertz, vorzugsweise etwa 1 Megahertz vorgesehen ist.

18. Schnittstelle nach einem der Ansprüche 11 bis 17, bei der für das bzw. die Datenwörter eine Bitlänge von 20 Bits vorgesehen ist.

19. Schnittstelle nach einem der Ansprüche 11 bis 18, bei der die Prüfbits auf einem sogenannten "cyclic redundancy check (CRC)" basieren und eine Bitlänge von 5 Bits haben.

20. Schnittstelle nach einem der Ansprüche 11 bis 19, bei der alle 62,5 Mikrosekunden ein Datenblock (10) zur Übertragung vorgesehen ist.
